# FASCICULE DE BREVET EUROPEEN

(11) **EP 3 940 260 B1**
(45) Date de publication et mention de la délivrance du brevet: **13.09.2023**
(21) Numéro de dépôt: 21184171.3
(22) Date de dépôt: 07.07.2021
(51) Int. Cl.: F16F 1/38, F16F 7/108

(54) **DISPOSITIF DE FILTRAGE DES VIBRATIONS D'UN MOTEUR DE VÉHICULE**
VORRICHTUNG ZUR SCHWINGUNGSFILTERUNG EINES FAHRZEUGMOTORS
DEVICE FOR FILTERING THE VIBRATIONS OF A VEHICLE ENGINE

(30) Priorité: 09.07.2020 FR 2007276
(43) Date de publication de la demande: 19.01.2022
(73) Titulaire: ContiTech Vibration Control GmbH, 30165 Hannover (DE)
(72) Inventeur: GUENO, Eric, 30165 Hannover (DE); HERCOUET, Roland, 30165 Hannover (DE); KERGUELEN, Franck, 30165 Hannover (DE)
(74) Mandataire: Hardouin, Briac

(56) Documents cités:
- WO-A1-2019/197294
- WO-A2-2006/024426
- DE-B3- 10 249 387
- US-A- 4 889 328

## Description

### Domaine technique de l'invention

Comme cela est connu en soi, des organes d'amortissement, couramment appelé « Silent Blocs » (marque déposée) ou « dampers » sont interposés entre le moteur d'un véhicule automobile et son châssis, afin d'amortir les vibrations transmises par ce moteur au châssis, et donc à l'intérieur de l'habitacle du véhicule.

Ces organes d'amortissement permettent d'améliorer significativement le sentiment de confort des passagers, ainsi que de limiter la fatigue de l'ensemble des pièces mécaniques constitutives du véhicule.

Etat de la technique et problème technique restant posé

Dans le cas particulier des véhicules automobiles à moteur hybride, le groupe moto-propulseur comprend, outre la boîte de vitesses, d'une part un moteur thermique et d'autre part un moteur/générateur électrique.

Dans un tel moteur hybride, il existe plusieurs modes de fonctionnement : au départ, c'est le moteur électrique seul qui assure le démarrage, puis passée une certaine vitesse, le moteur thermique prend le relais.

Dans certaines phases, le moteur thermique et le moteur électrique peuvent fonctionner ensemble pour fournir un surplus de puissance, par exemple lorsqu'il s'agit d'effectuer un dépassement.

Dans d'autres phases, le moteur électrique fonctionne seul, et les autres bruits ne sont alors plus couverts par le bruit du moteur, contrairement au cas d'un moteur thermique.

De nouveaux bruits deviennent audibles, et en particulier ceux engendrés par les engrenages de la boîte de vitesses, bruits hautes fréquences couramment appelés « bruits de sirène », désagréables pour les passagers du véhicule.

La présente invention a ainsi notamment pour objectif de fournir un dispositif de filtrage pour moteur de véhicule automobile notamment hybride, permettant de remédier à ces inconvénients.

Un tel dispositif est connu du document WO 2019/197294 A1, qui est considéré comme représentant l'art antérieur le plus proche de la revendication 1.

### Exposé de l'invention

On atteint ce but, ainsi que d'autres avantages qui seront décrits dans ce qui suit, avec un dispositif de filtrage des vibrations d'un moteur de véhicule, comprenant :
- un organe d'entrée destiné à être fixé sur la boîte de vitesses dudit véhicule, un premier corps élastique monté sur cet organe d'entrée,
- un organe de sortie destiné à être fixé au châssis dudit véhicule, un deuxième corps élastique monté sur l'organe de sortie, et
- une masse interposée entre elles ledit premier corps élastique et ledit deuxième corps élastique.

Grâce à ces caractéristiques, on obtient donc un dispositif de filtrage des vibrations à deux étages, permettant de réaliser un double filtrage des vibrations en provenance du ou des moteur(s) et de la boîte de vitesses, chaque étage de filtrage pouvant être adapté à un problème vibratoire particulier : par exemple le premier étage peut être adapté pour absorber les vibrations engendrées par les engrenages de la boîte de vitesses, et le deuxième étage peut être adapté pour absorber des vibrations engendrées par le moteur et la route.

En pratique, ces régimes vibratoires différents peuvent correspondre aux phases de fonctionnement thermique et électrique d'un groupe moto-propulseur hybride.

Suivant d'autres caractéristiques optionnelles de ce dispositif de filtrage :
- ladite masse est formée dans un métal ou alliage métallique sélectionné dans le groupe comprenant l'aluminium, l'acier, la fonte : le choix d'un matériau métallique et son calibrage permette d'obtenir précisément les caractéristiques de filtrage de vibration souhaitées, avec un minimum d'encombrement ;
- lesdits organes d'entrée et de sortie sont formés dans un métal ou alliage métallique sélectionné dans le groupe comprenant l'aluminium et l'acier : le choix de ces matériaux permet d'avoir des organes d'entrée et de sortie présentant la résistance nécessaire eu égard aux contraintes auxquelles ils sont soumis ;
- ce dispositif présente un encombrement identique à celui d'un dispositif de filtrage à un seul étage : grâce à cette caractéristique, on obtient le double étage de filtrage sans qu'il soit nécessaire de modifier la géométrie des pièces du châssis et/ou du moteur du véhicule. Le dispositif selon invention est ainsi adaptable dans un environnement existant ;
- lesdits organes d'entrée et de sortie, lesdits organes élastiques et ladite masse sont calibrés pour présenter une raideur supplémentaire pour des fréquences de vibration comprises entre 200 Hz et 500 Hz, et une moindre raideur au-delà de cette plage de fréquences : ces caractéristiques particulières de filtrage peuvent convenir à un véhicule équipé d'un groupe moto-propulseur hybride, ou purement électrique.
- lesdits premiers et deuxième corps élastiques et ladite masse métallique sont disposés de manière sensiblement concentrique : cet agencement particulièrement peu encombrant est adapté notamment à un moteur purement électrique.

La présente invention se rapporte également à un véhicule automobile, comprenant un groupe moto-propulseur relié au châssis du véhicule par au moins un dispositif de filtrage conforme à ce qui précède : un tel véhicule peut ainsi bénéficier du double étage de filtrage du dispositif selon l'invention, ce qui permet l'absorption efficace des vibrations du moteur dans toutes les plages de fonctionnement de celui-ci.

Ce double étage de filtrage convient particulièrement au cas d'un véhicule automobile dont le groupe moto-propulseur est hybride thermique/électrique, ou purement électrique.

### Brève description des dessins

D'autres caractéristiques et avantages de l'invention ressortiront à la lecture de la description qui suit, en référence aux figures annexées, qui illustrent :
[Fig. 1] : une vue générale d'un groupe moto-propulseur de véhicule automobile monté sur le châssis de ce véhicule, permettant de localiser l'implantation d'un dispositif de filtrage selon l'invention ;
[Fig. 2] : une vue en coupe d'un dispositif de filtrage selon l'invention ;
[Fig. 3] : une vue en perspective du premier étage de ce dispositif de filtrage ; et
[Fig. 4] : un graphique indiquant en trait continu la raideur d'un dispositif de filtrage selon l'invention en fonction de la fréquence des vibrations auxquelles il est soumis, et en trait discontinu les informations analogues pour un dispositif de filtrage à étage unique de la technique antérieure, les mesures étant effectuées selon l'axe Z du véhicule, c'est-à-dire selon la direction verticale ;
[Fig. 5] : un graphique analogue à celui de la figure 4, les mesures étant effectuées selon l'axe Y du véhicule, c'est-à-dire selon l'axe transversal à la direction d'avancement de ce véhicule ;
[Fig. 6] : un graphique analogue à celui de la figure 5, les mesures étant effectuées selon l'axe Z du véhicule, c'est-à-dire selon l'axe vertical ;
[Fig. 7] : une vue en perspective éclatée d'un autre mode de réalisation d'un dispositif de filtrage selon invention, particulièrement adapté à un moteur purement électrique ;
[Fig. 8] : une vue de face de ce dispositif de filtrage, à l'état assemblé ; et
[Fig. 9] : une vue en perspective des moyens élastiques de ce dispositif de filtrage.

Pour plus de clarté, les éléments identiques ou similaires sont repérés par des signes de référence identiques ou similaires sur l'ensemble des figures.

### Description détaillée de modes de réalisation de l'invention

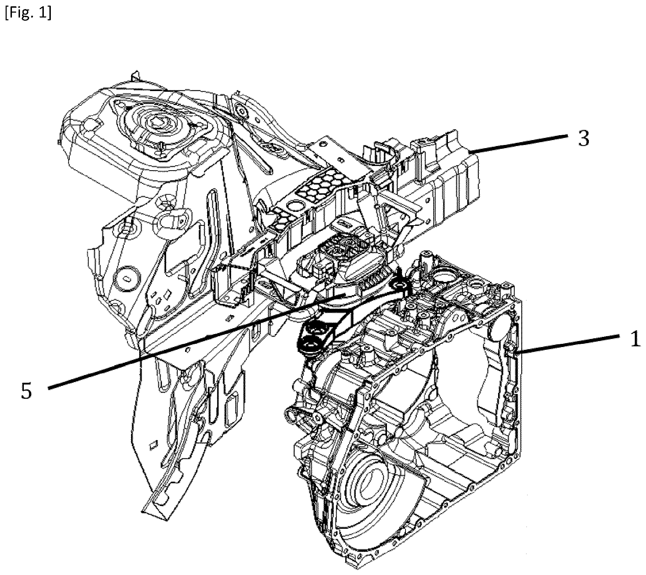

On se reporte à présent à la figure 1, sur laquelle on a représenté un groupe moto-propulseur 1 de véhicule automobile fixé sur le châssis 3 de ce véhicule.

Dans le cadre de la présente invention, ce groupe moto-propulseur 1 est de préférence du type hybride thermique/électrique, mais l'invention n'est bien entendu nullement limitée à ce cas particulier.

Dans un tel groupe moto-propulseur hybride, le moteur thermique assure les régimes de rotation de l'arbre moteur à vitesse relativement basse, typiquement de 25 à 6000 tr/m, alors que le moteur électrique peut avoir un régime important, de 0 à 10 000 tr/m.

Classiquement, le groupe moto-propulseur est suspendu au châssis du véhicule par trois points de fixation, dont un point 5 situé au-dessus de ce groupe, où se trouve le dispositif de filtrage 7 selon l'invention.

Dans le cadre de la présente invention, le dispositif de filtrage proposé 7 est destiné en particulier à être interposé entre le groupe moto-propulseur 1 et ce point de suspension supérieure 5, mais l'invention n'est bien entendu nullement limitée à cette configuration.

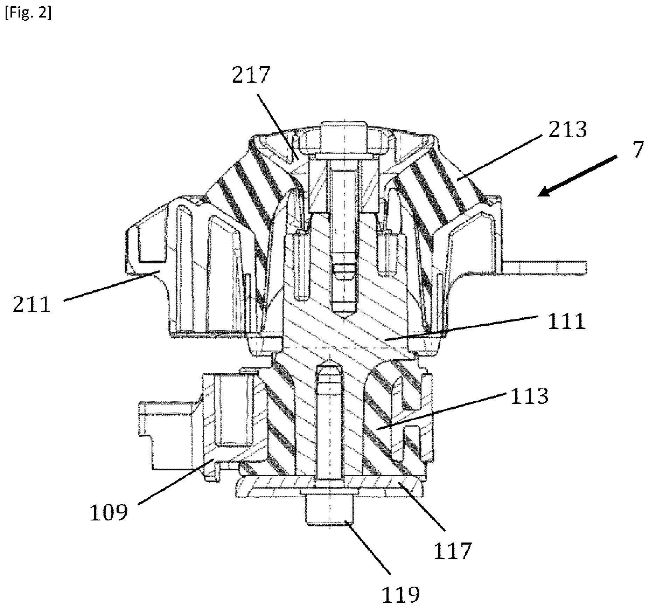

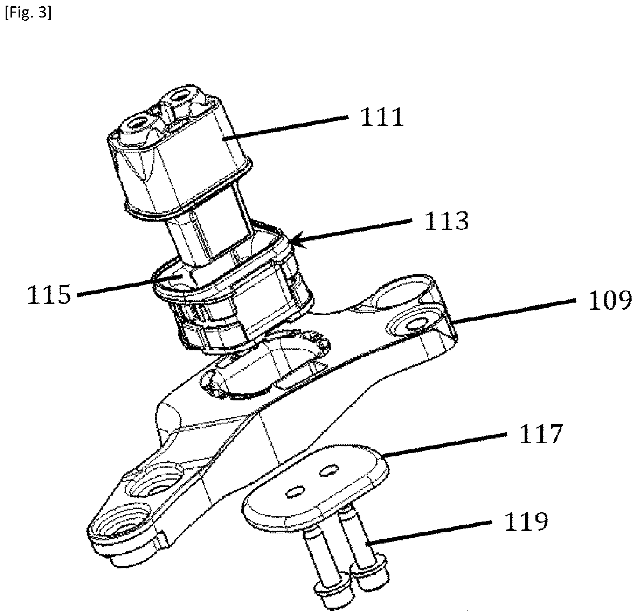

En se reportant à présent aux figures 2 et 3, on peut voir que le dispositif de filtrage 7 selon l'invention comprend en réalité deux étages.

Plus précisément, le premier étage comprend un organe d'entrée métallique 109 destiné à être fixé rigidement sur le groupe moto-propulseur 1 et un premier corps élastique 113 monté à l'intérieur de ce premier organe d'entrée métallique 109.

Comme cela est plus particulièrement visible sur la figure 3, le premier corps élastique 113 présente sensiblement la forme d'une cuvette, recevant dans sa partie creuse 115 une masse métallique 111.

Une plaque de butée 117 est reliée à l'organe d'entrée métallique 109 par une paire de vis 119 qui traversent cet organe d'entrée métallique 109 et le premier corps élastique 113, et sont vissées dans la masse métallique 111.

Ce premier étage de filtrage est souvent désigné par « main filtrée moteur » par les spécialistes du domaine considéré.

L'organe d'entrée métallique 109 et la masse métallique 111 sont quant à eux souvent désignés par les termes « nez d'interface ».

Ces organes métalliques peuvent être réalisés en aluminium, en acier ou en fonte par exemple.

Le premier corps élastique 113 peut quant à lui être réalisé en caoutchouc synthétique.

En se reportant à présent à la vue en coupe de la figure 2, sur laquelle l'ensemble des pièces du dispositif de filtrage sont représentées en position assemblée, on peut voir que la masse métallique 111 est elle-même reliée à un organe de sortie métallique 211 par l'intermédiaire d'un deuxième corps élastique 213.

Une deuxième plaque de butée métallique 217, reliée par des vis à la masse métallique 111, assure le maintien entre la masse métallique 111 et l'organe de sortie métallique 211.

Cet organe de sortie métallique 211 est lui-même destiné à être fixé sur le châssis moteur 3 du véhicule automobile.

Les matériaux formant les différents composants de ce deuxième étage de filtrage sont analogues à ceux du premier étage.

Le mode de fonctionnement et les avantages du dispositif de filtrage qui vient d'être décrit sont les suivants.

Ce dispositif de filtrage est typiquement destiné à être interposé entre le point de fixation avant du groupe moto-propulseur 1 et le châssis moteur 3 du véhicule automobile comme cela est visible sur la figure 1, étant noté qu'il y a en général 3 points de fixation de ce groupe sur le châssis.

L'organe d'entrée métallique 109 est fixé par exemple au moyen de vis sur le groupe moto-propulseur 1, et l'organe de sortie métallique 211 est fixé sur le châssis moteur 3 du véhicule.

Le dispositif de filtrage selon l'invention constitue ainsi un point de suspension par le haut du groupe moto-propulseur 1.

La première plaque métallique de butée 117, tout en autorisant les mouvements de la masse métallique 111 par rapport à l'organe métallique d'entrée 109, empêche la désolidarisation de ces deux pièces, et ainsi la chute du moteur à terre.

Sous l'effet des vibrations du groupe moto-propulseur 1, l'organe d'entrée métallique 109 vibre par rapport à la masse métallique 111, ces vibrations étant amorties par le premier corps élastique 113.

De même, la masse métallique 111 vibre par rapport à l'organe métallique de sortie 211, ces vibrations étant absorbées par le deuxième corps élastique 213.

On obtient de la sorte un dispositif de filtrage à deux étages des vibrations transmises par le groupe moto-propulseur 1 au châssis 3 du véhicule.

En choisissant de manière appropriée les caractéristiques respectives (matériaux, dimensions, poids, forme) de chacun des deux corps élastiques 113, 213 ainsi que de la masse métallique 111, on peut filtrer les vibrations transmises par le groupe moto-propulseur 3 dans des plages de fréquences prédéterminées.

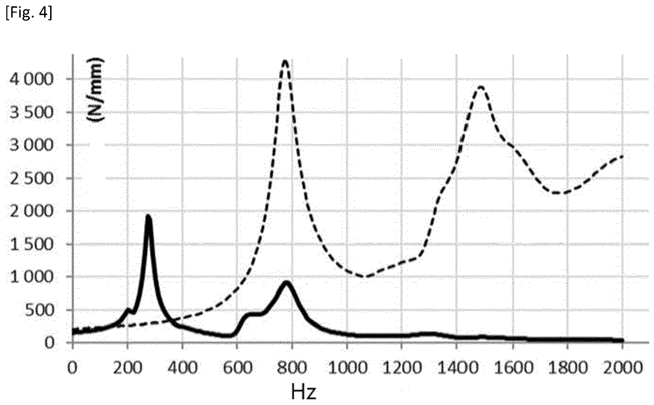

Ceci est illustré par le graphique de la figure 4 sur lequel on a représenté les vibrations mesurées en sortie du dispositif de filtrage selon l'invention (courbes en trait gras), par comparaison avec les vibrations mesurées avec un dispositif de filtrage de l'état de la technique à étage unique (courbes en pointillés).

Sur l'axe des abscisses de ce graphique sont représentées les fréquences de vibration en Hertz, et sur l'axe des ordonnées les raideurs équivalentes du système à masse + ressort constitué par le dispositif de filtrage concerné.

Pour mémoire, il est ici rappelé que plus la raideur équivalente du dispositif de filtrage est élevée, moins les vibrations engendrées par le groupe moto-propulseur 1 sont amorties, et donc plus le niveau de bruit perçu notamment à l'intérieur de l'habitacle du véhicule, augmente.

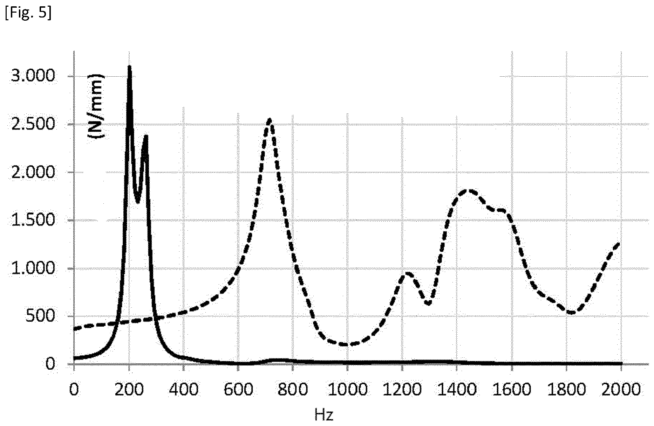

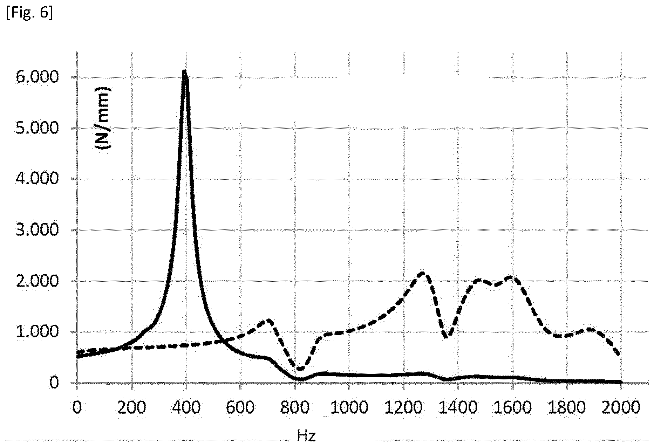

Les figures 4, 5, et 6 indiquent les raideurs mesurées selon les directions X, Y, Z respectivement, correspondant aux directions longitudinale, transversale et verticale d'un véhicule automobile.

Comme cela est visible sur ces figures, le dispositif de filtrage à double étage selon l'invention permet d'obtenir des raideurs très faibles au-delà de certaines fréquences de vibration, par comparaison avec un dispositif de filtrage à étage unique de l'état de la technique.

Typiquement, de faibles valeurs de raideurs sont obtenues au-delà de 800 Hz selon les directions X et Z du véhicule, et au-delà de 400 Hz selon la direction Y.

Ces valeurs correspondent typiquement à un groupe moto-propulseur hybride, c'est-à-dire comprenant un moteur thermique permettant de propulser le véhicule dans une plage de vitesses basses, et un moteur électrique prenant le relai et permettant de propulser le véhicule dans une plage de vitesses hautes.

Le moteur électrique tourne à des fréquences très supérieures à celles du moteur thermique, et le dispositif à double étage de filtrage selon l'invention permet d'absorber spécifiquement les vibrations correspondant à ces fréquences, et ainsi corrélativement de supprimer les bruits spécifiques au fonctionnement d'un moteur électrique, tels que les bruits de « sirène » engendrés par les engrenages de la boîte de vitesses.

Comme on peut le comprendre à la lumière de ce qui précède, le dispositif de filtrage à double étage selon l'invention permet de travailler séparément sur l'absorption des vibrations dans des plages de fréquences distinctes, et ainsi de s'adapter à des groupes moto-propulseurs notamment hybrides qui engendrent des vibrations très différentes selon que l'on fonctionne en régime thermique ou électrique.

Le dispositif selon l'invention peut être conçu pour tenir dans le même volume qu'un dispositif classique à simple étage, et donc ne nécessitant aucune modification de la géométrie des pièces environnantes du véhicule.

Naturellement, l'invention est décrite dans ce qui précède à titre d'exemple. Il est entendu que l'homme du métier est à même de réaliser différentes variantes de réalisation de l'invention sans pour autant sortir du cadre de l'invention.

C'est ainsi par exemple que le concept de l'invention pourrait s'étendre à un dispositif de filtrage à plus de deux étages, comme par exemple à un dispositif de filtrage à trois étages, chaque étage permettant de traiter une plage distincte de fréquences.

C'est ainsi également que l'invention pourrait être appliquée à un moteur purement électrique.

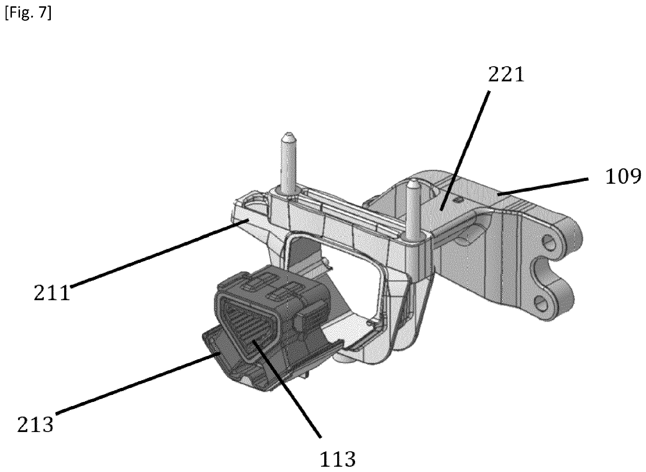

On a représenté sur les figures 7, 8, 9 un mode de réalisation du dispositif de filtrage selon l'invention adapté à un tel moteur purement électrique.

Sur ces figures, la pièce 109 est l'organe d'entrée métallique destiné à être fixé sur le moteur électrique, et la pièce 211 et l'organe de sortie métallique destiné à être fixé au châssis du véhicule.

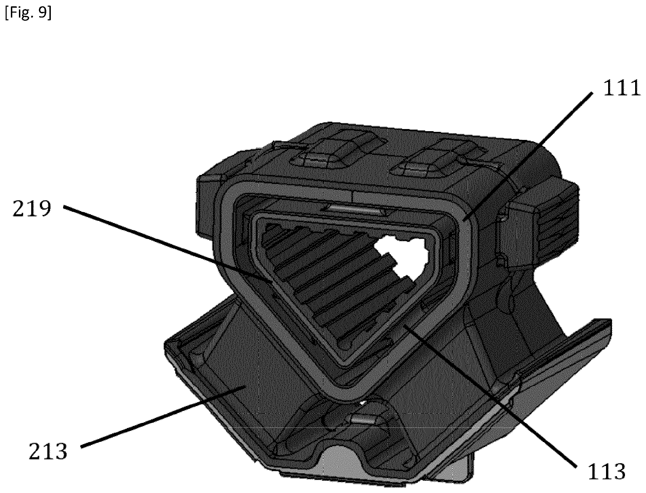

Comme cela est visible notamment sur la figure 9, des premier 113 et deuxième 213 corps élastiques, disposés de manière sensiblement concentrique, sont interposés entre les organes métalliques d'entrée 109 et de sortie 211.

Entre les deux corps élastiques 113, 213 est interposée une masse métallique 111.

Par « concentrique », on entend ici que le premier corps élastique 113 est emboîté à l'intérieur de la masse métallique 111, elle-même emboîtée à l'intérieur du deuxième corps élastique 213.

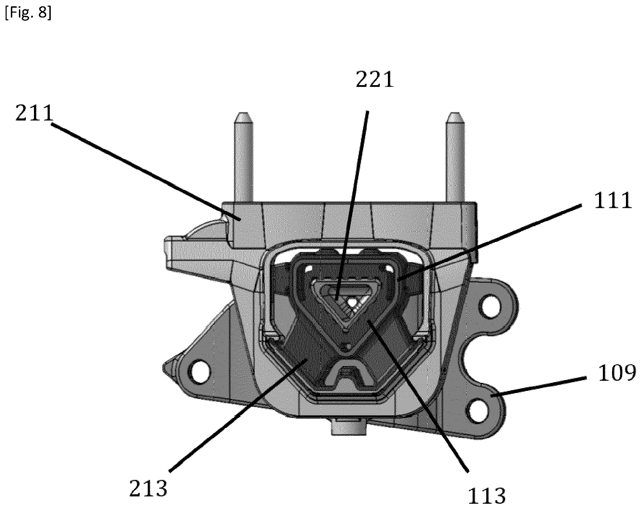

Les sections de ces corps élastiques et de cette masse métallique peuvent par exemple présenter une forme sensiblement triangulaire, comme cela est visible notamment sur la figure 8, et le premier corps élastique 113, disposé le plus à l'intérieur, peut être renforcé par une frette métallique 219, et s'emboîter sur un doigt 221 de section sensiblement triangulaire formé d'un seul tenant avec l'organe métallique de sortie 211.

## Revendications

1. Dispositif de suspension par le haut d'un groupe motopropulseur d'un véhicule adapté pour filtrer des vibrations générées par ledit groupe motopropulseur, le dispositif étant **caractérisé en ce qu'**il comprend :
- un organe d'entrée (109) destiné à être fixé sur la boîte de vitesses dudit véhicule, prenant appui sur une première plaque de butée (117) par l'intermédiaire d'un premier corps élastique (113) interposé entre l'organe d'entrée (109) et la première plaque de butée (117),
- une masse (111) à laquelle est fixée la première plaque de butée (117) par l'intermédiaire d'au moins une vis de fixation (119) traversant l'organe d'entrée (109) et le premier corps élastique (113),
- un organe de sortie (211) destiné à être fixé au châssis dudit véhicule, auquel la masse (111) est suspendue par l'intermédiaire d'une deuxième plaque de butée (217) fixée à la masse (111) par une vis de fixation et d'un deuxième corps élastique (213) interposé entre la deuxième butée (217) et l'organe de sortie (211).

2. Dispositif selon la revendication 1, dans lequel ladite masse (111) est formée dans un métal ou alliage métallique sélectionné dans le groupe comprenant l'aluminium, l'acier, la fonte.

3. Dispositif selon l'une des revendications 1 ou 2, dans lequel lesdits organes d'entrée (109) et de sortie (211) sont formés dans un métal ou alliage métallique sélectionné dans le groupe comprenant l'aluminium et l'acier.

4. Dispositif selon l'une quelconque des revendications précédentes, présentant un encombrement identique à celui d'un dispositif de filtrage à un seul étage.

5. Dispositif selon l'une quelconque des revendications précédentes, dans lequel lesdits organes d'entrée (109) et de sortie (211), lesdits corps élastiques (113, 213) et ladite masse (111) sont calibrés pour présenter une raideur supplémentaire pour des fréquences de vibration comprises entre 200 Hz et 500 Hz, et une moindre raideur au-delà de cette plage de fréquences.

6. Dispositif selon l'une quelconque des revendications précédentes, dans lequel lesdits premiers (113) et deuxième (213) corps élastiques et ladite masse métallique (111) sont disposés de manière sensiblement concentrique.

7. Véhicule automobile, comprenant un groupe moto-propulseur (1) relié au châssis (3) du véhicule par au moins un dispositif de filtrage conforme à l'une quelconque des revendications précédentes.

8. Véhicule automobile selon la revendication 7, dans lequel ledit groupe moto-propulseur est hybride thermique/électrique ou purement électrique.

## Patentansprüche

1. Obenliegende Aufhängungsvorrichtung einer Motorantriebsgruppe eines Fahrzeugs, die dazu angepasst ist, durch die Motorantriebsgruppe erzeugte Schwingungen zu filtern, wobei die Vorrichtung **dadurch gekennzeichnet ist, dass** sie Folgendes beinhaltet:
- ein Eingangselement (109), das dazu bestimmt ist, an dem Getriebe des Fahrzeugs befestigt zu sein, und das sich vermittels eines ersten elastischen Körpers (113), der zwischen das Eingangselement (109) und eine erste Anschlagplatte (117) eingefügt ist, auf der ersten Anschlagplatte (117) abstützt,
- ein Gewicht (111), an dem die erste Anschlagplatte (117) vermittels mindestens einer Befestigungsschraube (119), die durch das Eingangselement (109) und den ersten elastischen Körper (113) hindurchgeht, befestigt ist,
- ein Ausgangselement (211), das dazu bestimmt ist, an dem Fahrgestell des Fahrzeugs befestigt zu sein, und an dem das Gewicht (111) vermittels einer zweiten Anschlagplatte (217), die mit einer Befestigungsschraube an dem Gewicht (111) befestigt ist, und eines zweiten elastischen Körpers (213), der zwischen den zweiten Anschlag (217) und das Ausgangselement (211) eingefügt ist, aufgehängt ist.

2. Vorrichtung nach Anspruch 1, wobei das Gewicht (111) aus einem Metall oder einer Metalllegierung gebildet ist, das/die aus der Gruppe ausgewählt ist, die Aluminium, Stahl und Gusseisen beinhaltet.

3. Vorrichtung nach einem der Ansprüche 1 oder 2, wobei das Eingangselement (109) und das Ausgangselement (211) aus einem Metall oder einer Metalllegierung gebildet sind, das/die aus der Gruppe ausgewählt ist, die Aluminium und Stahl beinhaltet.

4. Vorrichtung nach einem beliebigen der vorhergehenden Ansprüche, die einen gleichen Platzbedarf wie eine einstufige Filterungsvorrichtung aufweist.

5. Vorrichtung nach einem beliebigen der vorhergehenden Ansprüche, wobei das Eingangselement (109) und das Ausgangselement (211), die elastischen Körper (113, 213) und das Gewicht (111) kalibriert sind, um bei Schwingungsfrequenzen zwischen 200 Hz und 500 Hz eine zusätzliche Steifigkeit und oberhalb dieses Frequenzbereichs eine geringere Steifigkeit aufzuweisen.

6. Vorrichtung nach einem beliebigen der vorhergehenden Ansprüche, wobei der erste (113) und der zweite (213) elastische Körper und das Metallgewicht (111) im Wesentlichen konzentrisch angeordnet sind.

7. Kraftfahrzeug, das eine Motorantriebsgruppe (1) beinhaltet, die durch mindestens eine Filterungsvorrichtung nach einem beliebigen der vorhergehenden Ansprüche mit dem Fahrgestell (3) des Fahrzeugs verbunden ist.

8. Kraftfahrzeug nach Anspruch 7, wobei die Motorantriebsgruppe eine hybride Verbrenner-/Elektrogruppe oder eine reine Elektrogruppe ist.

## Claims

1. Suspension device at the top of a powertrain of a vehicle, designed to filter vibrations generated by said powertrain, the device being **characterized in that** it comprises:
- an input member (109) intended to be fastened to the gearbox of said vehicle, bearing against a first stop plate (117) by way of a first elastic body (113) interposed between the input member (109) and the first stop plate (117),
- a mass (111) to which the first stop plate (117) is fastened by way of at least one fastening screw (119) passing through the input member (109) and the first elastic body (113),
- an output member (211) intended to be fastened to the chassis of said vehicle, from which the mass (111) is suspended by way of a second stop plate (217), fastened to the mass (111) by a fastening screw, and a second elastic body (213) interposed between the second stop (217) and the output member (211).

2. Device according to Claim 1, wherein said mass (111) is formed of a metal or metal alloy selected from the group comprising aluminium, steel and cast iron.

3. Device according to either of Claims 1 and 2, wherein said input member (109) and output member (211) are formed of a metal or metal alloy selected from the group comprising aluminium and steel.

4. Device according to any one of the preceding claims, having a footprint identical to that of a single-stage filtering device.

5. Device according to any one of the preceding claims, wherein said input member (109) and output member (211), said elastic bodies (113, 213) and said mass (111) are calibrated to exhibit an additional stiffness for vibration frequencies between 200 Hz and 500 Hz, and a lower stiffness beyond this range of frequencies.

6. Device according to any one of the preceding claims, wherein said first elastic body (113) and second elastic body (213) and said metal mass (111) are disposed in a substantially concentric manner.

7. Motor vehicle comprising a powertrain (1) connected to the chassis (3) of the vehicle by at least one filtering device in accordance with any one of the preceding claims.

8. Motor vehicle according to Claim 7, wherein said powertrain is hybrid thermal/electric or purely electric.
